(19) **Europäisches Patentamt / European Patent Office / Office européen des brevets**

(11) **EP 1 876 590 B1**

(12) **EUROPEAN PATENT SPECIFICATION**

(45) Date of publication and mention
of the grant of the patent:
**11.05.2011 Bulletin 2011/19**

(51) Int Cl.:
***G11B 7/0065*** *(2006.01)*     ***G11B 7/09*** *(2006.01)*

(21) Application number: **07005292.3**

(22) Date of filing: **14.03.2007**

(54) **Optical information processing apparatus and method**

Vorrichtung und Verfahren zur Verarbeitung von optischen Informationen

Appareil et procédé de traitement d'informations optiques

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **05.07.2006 KR 20060063065**
**25.09.2006 KR 20060092890**

(43) Date of publication of application:
**09.01.2008 Bulletin 2008/02**

(73) Proprietor: **Daewoo Electronics Corporation Seoul (KR)**

(72) Inventors:
• **Kyu-Il, Jung**
  **Gangdong-gu**
  **Seoul (KR)**
• **Nak-Young, Kim**
  **Seoul (KR)**

(74) Representative: **Michalski, Stefan**
  **Michalski Hüttermann & Partner**
  **Patentanwälte**
  **Neuer Zollhof 2**
  **40221 Düsseldorf (DE)**

(56) References cited:
  **EP-A- 1 443 505     EP-A- 1 526 517**
  **WO-A-2005/052926**

EP 1 876 590 B1

**Description**

BACKGROUND

1. Technical Field

Embodiment of the invention relates to an optical information processing apparatus and an optical information processing method and, more particularly, to an optical information processing apparatus and an optical information processing method capable of detecting an angle servo error of a reference beam and a servo error of a recording medium by using readout beams reproduced from neighborhood tracks in reproduction of optical information.

2. Related Art

Recently, as the rapid development of IT and multimedia industries, large-sized storage apparatuses are required to store a large sized image data or moving picture as well as test data. Accordingly, much attention has been paid on a holographic optical information processing apparatus having a large storage capacity and a high processing speed.

The holographic optical information processing apparatus is a page-oriented memory which records and reproduces image information in units of an image page. The holographic optical information processing apparatus uses a parallel signal processing scheme to transmit data at a high transmission speed in comparison with CD or DVD. In addition, the holographic optical information processing apparatus uses a multiplexing scheme to record the image information on the same position so that the storage density can be greatly increased.

In general, the holographic optical information processing apparatus uses a disk-shaped optical information recording medium having tracks. An optical pickup device moving along the tracks of the optical information recording medium records data in recording regions of the tracks and reproduces the data from the recording regions of the tracks.

In order to increases a reliability of the holographic optical information processing apparatus, it is necessary to minimize a bit error rate (BER), that is, an error data in the reproduction of data.

In order to minimize the BER, the tracking of the reference beam needs to be performed accurately along the center of the track. In addition, an angle servo of the reference beam needs to be performed accurately on the recording medium.

An example of a method of detecting the tracking error is disclosed in US Patent Application Publication No. 2005/0030875, titled "Optical Information Recording Apparatus And Optical Information Reproducing Apparatus" by H. Horimai. In the Patent Document, a light source for reproducing data and a light source for obtaining a servo signal are separately provided. In addition, a beam reflected from pits recorded in advance on an optical information recording medium is detected by a photodiode or the like, and a tracking error signal is obtained by using the beam.

EP-A-1 526 517 discloses a method where three neighboring tracks are irradiated by a beam. Tracking of the center track is done by detecting a reflected intensity of a part of each of the two outer tracks and comparing these intensities.

An example of a method of detecting the angle servo error is disclosed in US Patent Application Publication No. 2005-0030876, titled "Optical Information Recording Apparatus And Optical Information Reproducing Apparatus" filed by Optware Corporation in Japan. In the Patent Document, a separate laser source of the angle servo control is used.

In the reproduction of the optical information, the tracking error and the angle servo error need to be accurately detected.

A sensitivity to the tracking error signal obtained based on the intensities of the beams reproduced or reflected from the optical information recording medium may be changed according to diffraction efficiencies of the recording regions or the neighborhood influence.

In addition, if the tracking error signal does not have symmetry with respect to the origin (the origin corresponding to a case where there is no tracking error), complicated calculation and calibration processes need to be performed to determine the tracking error.

In addition, since such a separate laser source is used to perform the angle servo control, the optical system and apparatus for servo control are complicated. Since the laser source for servo control uses a wavelength different from that of the optical information processing apparatus, constructions of the optical information recording medium or the optical information processing apparatus become more complicated.

SUMMARY

The invention provides an apparatus and a method capable of accurately detecting an angle servo error as defined in the appended claims.

BRIEF DESCRIPTION OF THE DRAWINGS

The above and other features and advantages of the invention will become more apparent by describing in detail exemplary embodiments thereof with reference to the attached drawings in which:

FIG. 1 is a view illustrating a construction of an optical information processing apparatus;

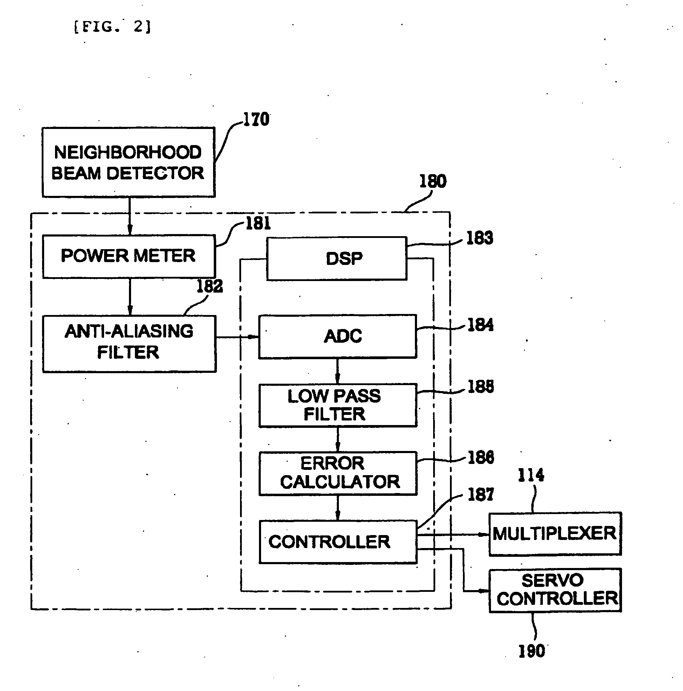

FIG. 2 is a view illustrating a signal processing unit of the optical information processing apparatus;

FIG. 3 is a schematic view illustrating an example of tracks on an optical information recording medium;

FIG. 4 is a schematic view illustrating readout beams detected by a photo detector in order to detect a tracking error;

FIG. 5 is a schematic view illustrating readout beams detected by the photo detector in a case where there is a tracking error;

FIG. 6 is a graph illustrating an intensity function of readout beams in a case where there is a tracking error;

FIGS. 7 to 9 are views illustrating intensities of readout beams detected by photodiodes of the photo detector;

FIGS. 10 to 12 are graphs illustrating tracking errors;

FIGS. 13 to 15 are graphs illustrating tracking errors according to a change in efficiency;

FIGS. 16 to 18 are graphs illustrating tracking errors according to a change in efficiency;

FIG. 19 is a schematic view illustrating an example of tracks on an optical information recording medium;

FIG. 20 is a schematic view illustrating readout beams detected by a photo detector in order to detect a servo error;

FIG. 21 illustrates graphs of intensities of neighborhood readout beams detected by the photo detector in order to detect a servo error;

FIG. 22 is a graph illustrating a compensation for time delay of a readout beam in a case where a servo error is detected; and

FIG. 23 is a schematic view illustrating another optical information recording reproducing apparatus.

DESCRIPTION OF EXEMPLARY EMBODIMENTS

Hereinafter, exemplary embodiments are described in detail with reference to the accompanying drawings. Like reference numerals denote like elements.

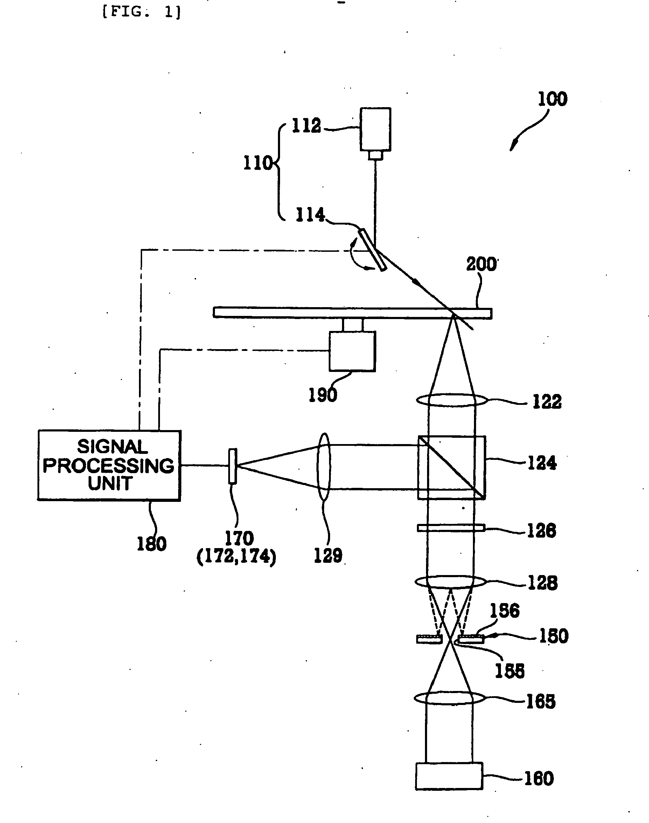

Referring to FIG. 1, an optical information processing apparatus 100 includes an optical system 110, a neighborhood beam separator 150, an optical information detector 160, a photo detector 170, and a signal processing unit 180.

The optical system 110 includes a light source 112 and a multiplexer 114. A reference beam generated by the light source 112 is irradiated on an optical information recording medium 200 through the multiplexer 114. The multiplexer 114 performs angular multiplexing by adjusting an incidence angle of the reference beam on the optical information recording medium 200. The multiplexer 114 may be constructed with a rotating mirror such as a Galvano mirror.

The optical information recording medium 200 includes recording regions where optical information is recorded (or to be recorded). When the reference beam is irradiated on the recording regions, the reference beams are diffracted by interference patterns formed on the recording regions, so that readout beams are generated. The optical information recording medium 200 has a shape of disk and includes a plurality of circular tracks. Each of the tracks includes a plurality of the recording regions.

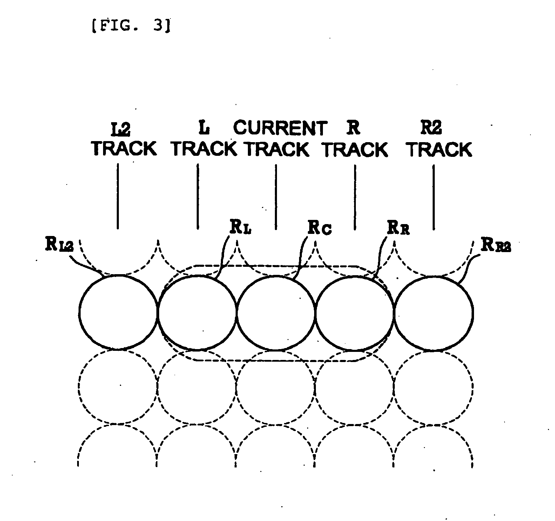

Referring to FIG. 3, a track L2, a track L, a current track, a track R, and a track R2 are sequentially disposed from the center of the optical information recording medium 200 in the outward direction.

The current track denotes a track including a recording region Rc of which current data is to be reproduced. The current track is subject to tracking through current tracking error detection. The current track may be any one of the tracks on the optical information recording medium 200.

Neighborhood tracks are disposed at left and right sides of the current track. The track L (the first neighborhood track) and the track L2 are sequentially disposed at the left side of the current track. The track R (the second neighborhood track) and the track R2 are sequentially disposed at the right side of the current track. Here, the left side denotes the one side of the current track, and the right side denotes the other side of the current track. However, the left and right sides are not limited to the sides shown in FIG. 3.

As described above, each of the tracks includes the recording region Rc, $R_L$, $R_{L2}$, $R_R$, and $R_{R2}$. In FIG. 3, one of recording region Rc is shown, and the recording regions $R_L$, $R_{L2}$, $R_R$, and $R_{R2}$ are also similarly shown. However, actually, a plurality of recording regions Rc are disposed along the current track, and a plurality of the recording regions $R_L$, $R_{L2}$, $R_R$, and $R_{R2}$ are also similarly disposed. The interference patterns of the reference beam and signal beams are recorded in the recording regions Rc, $R_L$, $R_{L2}$, $R_R$, and $R_{R2}$. When the reference beam is irradiated on the recording regions Rc, $R_L$, $R_{L2}$, $R_R$, and $R_{R2}$, the reference beam is diffracted by the interference patterns, so that the readout beams as same as the signal beams used at the time of recording are generated.

If the reference beam is irradiated on recording regions RC of the current track, the original data are sufficiently reproduced. However, according to Embodiment of the invention , the reference beam is irradiated on the neighborhood tracks as well as the current track. More specifically, the reference beam is irradiated on the current track and the neighborhood tracks, that is, the track L and the track R. Therefore, the recording region RC of the current track and the recording regions RL and RR of the tracks L and R are irradiated simultaneously.

However, the reference beam needs to completely enclose the recording region RL of the track L or the recording region RR of the track R. The reference beam may be irradiated so as to be wider than the recording region RC of the current track and overlap with the neighborhood tracks. As an example, the reference beam may be irradiated so as to partially overlap with the track L or the track R. As another example, the reference beam may be irradiated so as to overlap with the tracks L and L2 or the tracks R and R2.

Since the size of the irradiated reference beam is wider than the recording region Rc of the current track, the readout beam reproduced by the reference beam includes a readout beam reproduced from the recording region Rc and readout beams reproduced from the neighborhood tracks. Namely, when the reference beam is irradiated so as to overlap with the tracks L and R, the readout beam includes the readout beam reproduced from the recording region Rc of the current track, the readout beam reproduced from the recording regions $R_L$ of the track L, and the readout beam reproduced from the recording regions $R_R$ of the track R. Hereinafter, the readout beam reproduced from the recording regions Rc of the current track is referred to as a main readout beam, the readout beams reproduced from the recording regions of the neighborhood tracks are referred to as neighborhood readout beams.

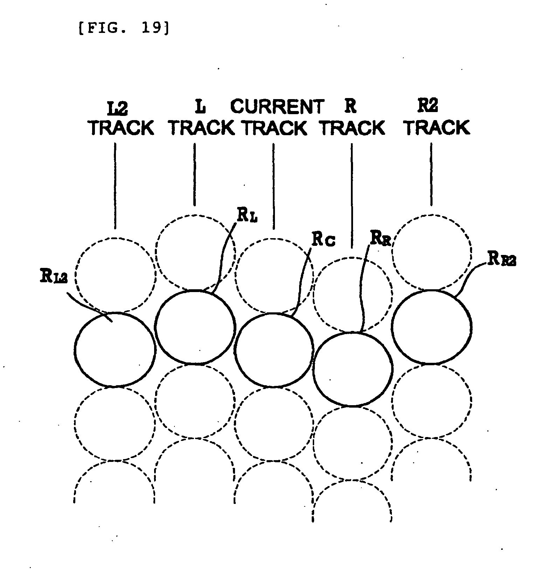

For the convenience of description, the recording region Rc of the current track, the recording region $R_L$ of the track L, and the recording region $R_R$ of the track R are aligned in a straight line perpendicular to the direction of track. However, the recording region Rc of the current track, the recording region $R_L$ of the track L, and the recording region $R_R$ of the track R may not be aligned in the straight line (see FIG. 19).

Returning to FIG. 1, the readout beams reproduced by the reference beam pass through a first lens 122 to be irradiated on a polarized beam splitter 124. The polarized beam splitter 124 passes a P polarization beam and reflects an S polarization beam. The P and S polarization beams are perpendicular to each other. Here, the P and S polarizations do not denote absolute polarization states

The P polarization readout beam divided by the polarized beam splitter 124 passes through a wavelength plate (a quarter wave plate) 126 to be changed into a circularly polarized beam. A second lens 128 focuses the readout beam on a neighborhood beam separator 150.

The neighborhood beam separator 150 has an aperture 155 to pass the main readout beam reproduced from the recording region Rc of the current track. The neighborhood beam separator 150 is a kind of a Nyquist filter.

The main readout beam passing through the aperture 155 passes through a third lens 165 to be detected by an optical information detector 160. The optical information detector 160 may be constructed with a pixel array such as CCD (charge-coupled device) or CMOS (complementary metal-oxide semiconductor). The optical information detector 160 detects optical information contained in the main readout beam. Accordingly, the optical information detector 160 can detect a data page of the recording regions Rc of the current track.

A reflecting layer 156 is formed on a region around the aperture 155 in the neighborhood beam separator 150 so as to reflect the readout beam. If there is no tracking error, only the main readout beam passes through the aperture 155, and the neighborhood readout beam is reflected by the reflecting layer 156. The readout beam that cannot pass through the aperture 155 is reflected by the reflecting layer 156, so that the readout beam is irradiated on the second lens 128.

The reflected readout beam passing through the second lens 128 passes through the wavelength plate 128 to be changed from the circularly polarized beam to the S polarization beam. The S polarization readout beam is reflected by the polarized beam splitter 124 to be directed to a fourth lens 129. The readout beam passing through the fourth lens 129 is irradiated on the photo detector 170.

The photo detector 170 detects an intensity of the readout beam. The photo detector 170 may be constructed with photodiodes or a photodiode array. A signal processing unit 180 receives information on the intensity of the readout beam detected by the photo detector 170 to calculate the tracking error.

As shown in FIG. 3, the signal processing unit 180 calculates the tracking error and an angle servo error based on the intensity of the neighborhood readout beam reproduced at the time of reproduction of the optical information. The signal processing unit 180 includes a power meter 181 which measures the intensity of the readout beam detected by the photo detector 170, an anti-aliasing filter 182 which adjusts a signal of the power meter 181, and a digital signal processor (DSP) 183 which determines the adjusted signal of the anti-aliasing filter 182 to generate a control signal for controlling the multiplexer 114 and a servo controller 190.

The digital signal processor 183 includes an AD converter 184 which converts the signal measured by the power meter 181 to a digital signal, a low pass filter 185 which filters the digital signal of the AD converter 184 to remove an unnecessary signal, an error calculator 186 which analyzes the signal of the AD converter 184 to calculate the tracking error and the angle servo error, and a controller 187 which controls the multiplexer 186 based on the calculates the servo state of the reference beam.

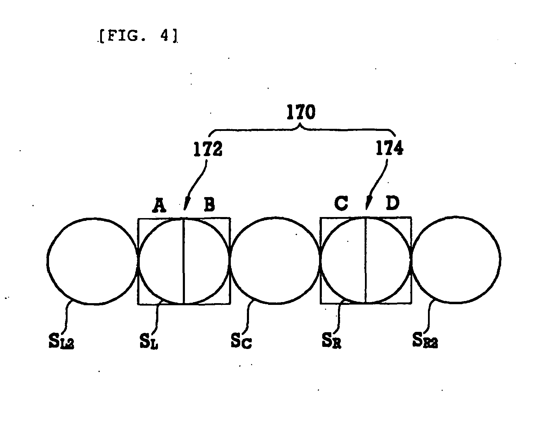

Referring to FIG. 4, the readout beams passing through the fourth lens 129 are detected in a form of spots by the photo detector 170. Here, $S_{L2}$, $S_L$, Sc, $S_R$, and $S_{R2}$ denote spots of the readout beams reproduced from the recording regions $R_{L2}$, $R_L$, Rc, $R_R$, and $R_{R2}$ of the tracks L2 and L, the current track, and the tracks R and R2, respectively.

The photo detector 170 includes a first photo detector 172 and a second photo detector 174. The first photo detector 172 detects the spot $S_L$, and the second photo detector 174 detects the spot $S_R$.

The first photo detector 172 is partitioned into two photodiodes A and B. The first photo detector 172 is partitioned in a rotation direction (or a track direction) of the optical information recording medium 200. A position error of the spot $S_L$ can be determined based on the intensity error of between the intensities $P_A$ and $P_B$ detected by the photodiodes A and B. Namely, if there is no tracking error, the intensity error $P_A$-$P_B$ is set to zero. Accordingly, the position error of the spot $S_L$ can be determined based on the sign and magnitude of the intensity error $P_A$-$P_B$.

The second photo detector 174 is partitioned into two photodiodes C and D. A position error of the spot $S_R$ can be determined based on the intensity error of between the intensities $P_C$ and $P_D$ detected by the photodiodes C and D.

Although the photo detector 170 is constructed with the first and second photo detectors 172 and 174, it is not limited thereto, but it may be constructed with one photo detector. In addition, instead of the photodiodes, the photo detector 170 may be constructed with other optical detecting devices.

Now, the tracking error detection is described in detail.

The signal processing unit 189 calculates a tracking error TE based on the intensities of the readout beams detected by the photo detector 170 by using Equation 1.

[Equation 1]

$$TE = \frac{(P_A - P_B) + (P_C - P_D)}{P_A + P_B + P_C + P_D}$$

According to this, the tracking error TE is obtained by using a difference between intensities of the neighborhood readout beams. The neighborhood readout beams include readout beams reproduced from two tracks which are different from each other. The tracking error is defined as a sum of the intensity error $P_A$-$P_B$ of the neighborhood readout beams reproduced from the track L and the intensity error $P_C$-$P_D$ of the neighborhood readout beams reproduced from the track R divided by a sum of the intensities $P_A$+$P_B$ of the neighborhood readout beams reproduced from the track L and the intensities $P_C$+$P_D$ of the neighborhood readout beams reproduced from the track R.

When there is no tracking error, the spot Sc passes through the aperture 155 without reflection on the reflecting layer 156, so that the spot Sc is not detected by the photo detector 170. In addition, among the neighborhood readout beams, the spot $S_L$ is detected by the first photo detector 172, and the spot $S_R$ is detected by the second photo detector 174. In this case, $P_A$-$P_B$ = 0, and $P_C$-$P_D$ = 0, so that the tracking error TE = 0 is obtained by using Equation 1.

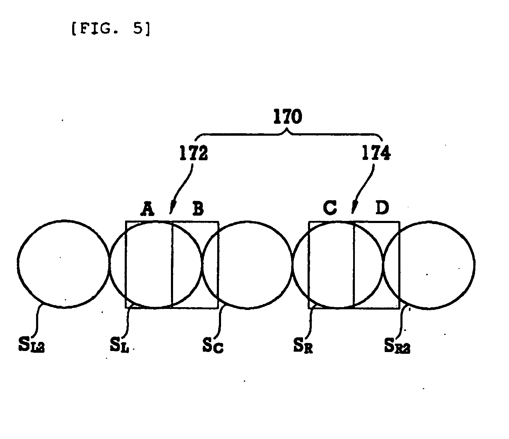

Referring to FIG. 5, if there is a tracking error, the reference beam is not accurately irradiated on the current track. Therefore, the main readout beam does not completely pass through the aperture 155, and a portion of the main readout beam is reflected by the reflecting layer 156. Due to the tracking error, the positions of the spots $S_{L2}$, $S_L$, Sc, $S_R$, and $S_{R2}$ detected by the photo detector 170 are changed. Since $P_A$-$P_B$ ≠ 0 and $P_C$-$P_D$ ≠ 0, the tracking error TE ≠ 0 is obtained by using Equation 1. Accordingly, the tracking error can be corrected by shifting the optical pickup device based on the obtained tracking error value TE.

Now, Equation 1 for calculating the tracking error is described in detail.

In order to accurately calculate the tracking error, a tracking error function has symmetry with respect to the origin. The origin corresponds to a case where there is no tracking error. The symmetry with respect to the origin denotes that the tracking errors of the left and right sides of the current track have the same shape. If there is no symmetry with respect to the origin, the shifting amounts of the optical pickup device tracking error in the left and right sides need to be separately determined according to the signs of the tracking errors, so that the control of tracking is complicated.

In addition, for a suitable equation of tracking error, sensitivity of efficiency of the readout beam needed to be lowered. In addition, the tracking error needs be invulnerable to a variation of the intensity of the readout beam.

Namely, in such a holographic optical information processing apparatus, since the readout beams are generated by diffraction of the reference beams on the interference patterns, the efficiencies of the readout beams detected by the photo detector 170 are not uniform according to the interference patterns. If the value of the tracking error is changed according to the efficiency of the readout beam, the tracking error needs to be re-adjusted according to the efficiency of the readout beam, so that the control of the tracking error is complicated.

A function of intensity of the spot detected by the photo detector 170 is denoted by $f(x)$. The functions of intensity of the spots $S_{L2}$, $S_L$, $S_c$, $S_R$, and $S_{R2}$ are denoted by $f_{L2}(x)$, $f_L(x)$, $f_c(x)$, $f_R(x)$, and $f_{R2}(x)$, respectively.

The functions $f_{L2}(x)$, $f_L(x)$, $f_c(x)$, $f_R(x)$, and $f_{R2}(x)$ of the spots can be assumed to be equal to each other because the readout beams pass through a fourth lens 129 which is a Fourier transformation lens. Namely, $f(x) = f_{L2}(x) = f_L(x) = f_c(x) = f_R(x) = f_{R2}(x)$. In addition, due to the Fourier transformation, the function of intensity is an even function, that is, $f(x) = f(-x)$.

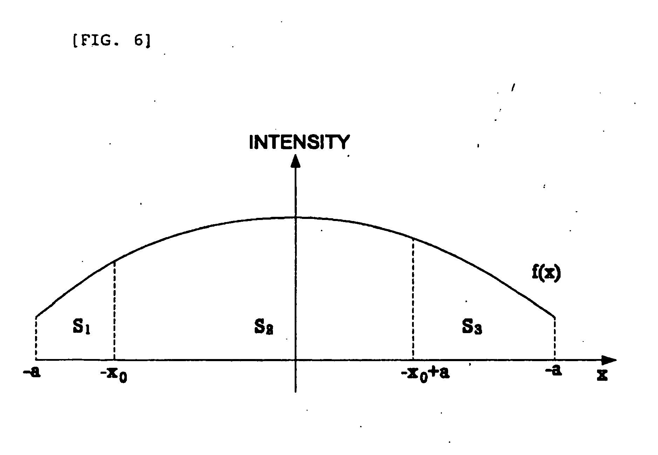

FIG. 6 illustrates a case where there is a tracking error that a spot is shifted by x0. In this case, the function of intensity is divided into the following sections defined by Equation 2.

[Equation 2]

$$S_1 = \int_{-a}^{-x_0} f(x)dx = \int_{x_0}^{a} f(x)dx$$

$$S_2 = \int_{-x_0}^{-x_0+a} f(x)dx = \int_{x_0-a}^{x_0} f(x)dx$$

$$S_3 = \int_{a-x_0}^{a} f(x)dx = \int_{-a}^{-a+x_0} f(x)dx$$

Here, x0 denotes a shifting distance of a reproduced spot, and "a" denotes a radius of the spot.

The shifting direction of the spot is determined according to a sign of the x0. In the embodiment, a positive sign (+) of the x0 denotes right sifting of the spot, and a negative sign (-) of the x0 denotes left sifting of the spot. Therefore, the shifting of the spots shown in FIGS. 4 and 5 corresponds to the negative sign (-) of the x0.

The intensities of the readout beams detected by the photodiodes A, B, C, and D of the first and second photo detectors 172 and 174 may be represented by two sections according to the sign of the x0 and the efficiencies of the spots.

If the sign of the x0 is positive, the intensities of the readout beams detected by the photodiodes A, B, C, and D can be represented by Equation 3.

[Equation 3]

$$P_A^+ = \eta_{L2}S_1 + \eta_L S_3$$

$$P_B^+ = \eta_L S_2$$

$$P_C^+ = \eta_C S_1 + \eta_R S_3$$

$$P_D^+ = \eta_R S_2$$

Here, $\eta_{L2}$, $\eta_L$, $\eta_C$, $\eta_R$, and $\eta_{R2}$ denote the efficiencies of the spots $S_{L2}$, $S_L$, Sc, $S_R$, and $S_{R2}$, respectively. The superscript "+" denotes the sign of the x0.

If the sign of the x0 is negative, the intensities of the readout beams detected by the photodiodes A, B, C, and D can be represented by Equation 4.

[Equation 4]

$$P_A^- = \eta_L S_2$$

$$P_B^- = \eta_L S_3 + \eta_C S_1$$

$$P_C^- = \eta_R S_2$$

$$P_D^- = \eta_R S_3 + \eta_{R2} S_1$$

If the reference beam is irradiated on the current track, the track L, and track R, the spots $S_{L2}$ and $S_{R2}$ are not nearly detected by the photo detector 179. Accordingly, $\eta_{L2} \approx O$, and $\eta_{R2} \approx O$. When the tracking errors are denoted by $TE_1 = P_A - P_B$ and $TE_2 = P_C - P_D$, Equations 3 and 4 can be represented by Equation 5.

[Equation 5]

$$TE_1^+ = \eta_L S_3 - \eta_L S_2$$

$$TE_1^- = \eta_L S_2 - \eta_L S_3 - \eta_C S_1$$

$$TE_2^+ = \eta_C S_1 + \eta_R S_3 - \eta_R S_2$$

$$TE_2^- = \eta_R S_2 - \eta_R S_3$$

In Equation 5, the tracking errors do not have symmetry due to $\eta_c S_1$.

In order to obtain symmetry, a new tracking error $TE_3$ is defined by Equation 6.

[Equation 6]

$$TE_3 = TE_1 + TE_2 = (P_A - P_B) + (P_C - P_D)$$

The tracking error $TE_3$ of Equation 6 can be represented by Equation 7 by using Equation 4.

[Equation 7]

$$TE_3^+ = (\eta_L S_3 + \eta_C S_1 + \eta_R S_3) - (\eta_L S_2 + \eta_R S_2)$$

$$TE_3^- = (\eta_L S_2 + \eta_R S_2) - (\eta_L S_3 + \eta_C S_1 + \eta_R S_3)$$

Namely, the absolute values of the $TE_3$ are equal to each other irrespective of the signs thereof. Therefore, the tracking error $TE_3$ has symmetry.

Now, the tracking error according to the efficiency of the readout beam is described.

The tracking error $TE_3$ of Equation 6 is not invulnerable to a variation of the intensity of the readout beam. Namely, the efficiencies $\eta_{L2}$, $\eta_L$, $\eta_R$, and $\eta_{R2}$ of the spots may be represented by Equation 8 by using the efficiency $\eta c$ of the spot Sc.

[Equation 8]

$$\eta_{L2} = k_{L2} \eta_C$$

$$\eta_L = k_L \eta_C$$

$$\eta_R = k_R \eta_C$$

$$\eta_{R2} = k_{R2} \eta_C$$

Here, $k_{L2}$, $k_L$, $k_R$, and $k_{R2}$ are constants. By substituting Equation 8 to Equation 7, the tracking error $TE_3$ can be represented by Equation 9.

[Equation 9]

$$TE_3^+ = \eta_C \{ (k_L + k_R)(S_3 - S_2) + S_1 \}$$

If there is a variation of the intensities of the readout beams, the efficiencies of the readout beams are changed, so that the constants $k_{L2}$, $k_L$, $k_R$, and $k_{R2}$ are also changed. Namely, $k_L = k_L + \Delta k_L$, $k_R = k_R + \Delta k_R$. By substituting the changed constants to Equation 9, the tracking error $TE_3$ can be represented by Equation 10.

$$k_L = k_L + \Delta k_L \ , \ k_R = k_R + \Delta k_R$$

$$= TE_3^+ + \eta_C \, \Delta k_{LR}(S_3 - S_2)$$

$$= TE_3^+ + \Delta TE_3^+$$

Here, $\Delta k_{LR} = \Delta k_L + \Delta k_R$, $\Delta k_{LR} = \Delta k_L + \Delta k_R$, $\Delta TE_+^3 = \eta_C \Delta k_{LR}(S_3 - S_2)$ From Equation 10, the

relation $|\Delta TE_3| = |\Delta TE_3^+| = |\Delta TE_3^-| = |\eta_C \Delta k_{LR}(S_3 - S_2)|$ can be obtained. It should be nodded that the tracking error $TE_3'$ has symmetry with respect to the origin. $\Delta TE_3$ depends on $\Delta k_{LR}$. Therefore, although the tracking error $TE_3'$ has symmetry with respect to the origin, the tracking error may be changed according to the efficiencies of the readout beams.

By substituting Equation 8 to the tracking error TE of Equation 1, the tracking error can be represented by Equation 10.

[Equation 10]

$$TE^+ = \frac{(k_L + k_R)(S_3 - S_2) + S_1}{(k_L + k_R)(S_3 + S_2) + S_1}$$

The error of the tracking error according to the efficiency of the readout beam can be represented by Equation 11.

[Equation 11]

$$\Delta TE^+ = TE^+|_{k=k+\Delta k} - TE^+|_k$$

$$= \frac{-2 \Delta k_{LR} S_1 S_2}{\{(k_L + k_R + \Delta k_{LR})(S_3 + S_2) + S_1\} \{(k_L + k_R)(S_3 + S_2) + S_1\}}$$

Here, the following equations are satisfied.

$$(k_L + k_R + \Delta k_{LR})(S_3 + S_2) > 0$$

$$S_1 > 0$$

$$(k_L + k_R)(S_3 + S_2) > 0$$

Therefore, Equation 11 can be represented by Equation 12.

[Equation 12]

$$|\Delta TE| < \left| \frac{2 \Delta k_{LR} S_1 S_2}{S_1 (k_L + k_R)(S_3 + S_2)} \right|$$

Here, $\left| \dfrac{\Delta k_{LR}}{k_L + k_R} \right| < 1$   As a result, the error $\Delta TE$ of the tracking error according to the efficiency of the readout beam can be represented by Equation 13.

[Equation 13]

$$|\Delta TE| < \left| \frac{2 S_2}{S_3 + S_2} \right|$$

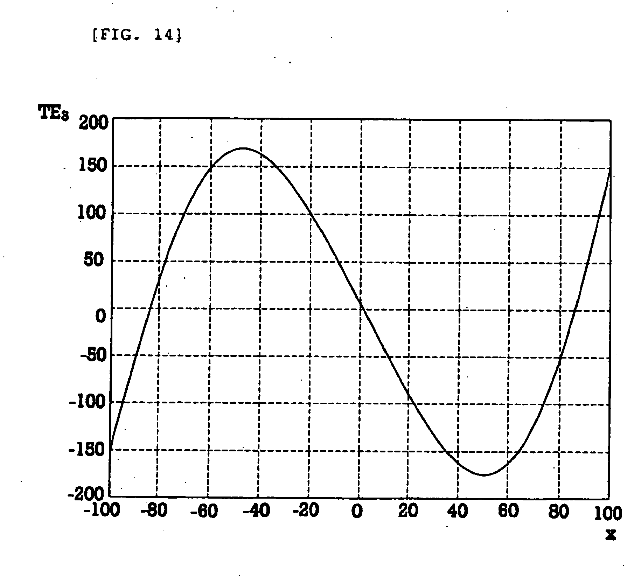

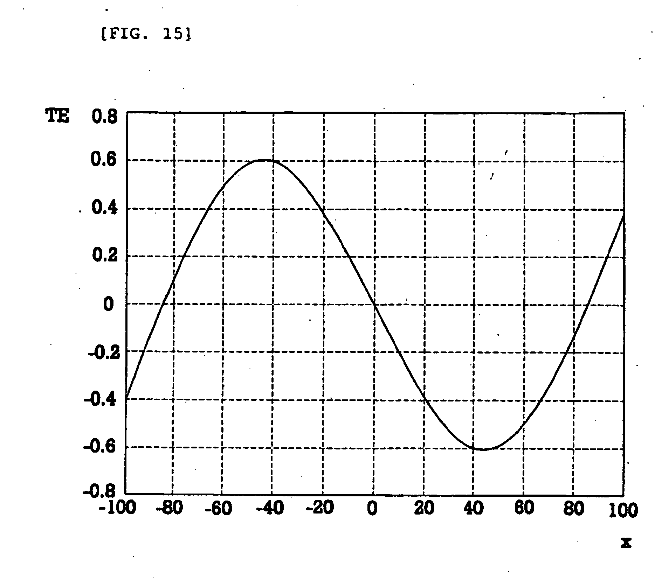

Namely, since the upper bound of the error $\Delta TE$ is independent of the variation $\Delta k$ of the efficiency $\eta$ of the reproduced spot, the sensitivity to the efficiency of the readout beam is lowered. Therefore, if there is a variation of the intensity of the readout beam, the tracking error is not nearly influenced by the variation of the intensity of the readout beam. Namely, the tracking error is invulnerable to the variation of the intensity of the readout beam.
Hereinafter, simulation of the detection of the tracking error is described.

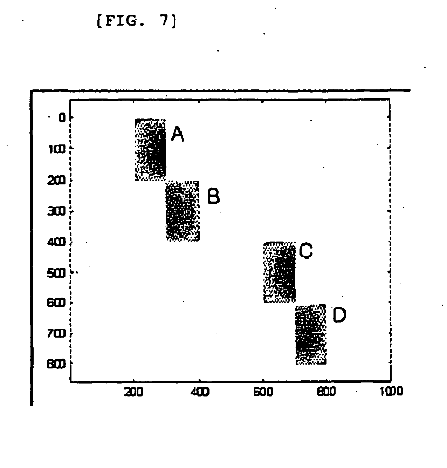

FIGS. 7 to 9 are views illustrating the intensities of the readout beams detected by photodiodes A, B, C, and D of the photo detector 170. The efficiencies of the spots are set to 1. Namely, $\eta_{L2} = \eta_L = \eta_R = \eta_{R2} = 1$.
FIG. 7 illustrates a case where there is no tracking error. The intensities of the readout beams detected by the photodiodes A and B of the first photo detector 172 are not nearly different from each other. Similarly, the intensities of the readout beams detected by the photodiodes C and D of the first photo detector 174 are not nearly different from each other.

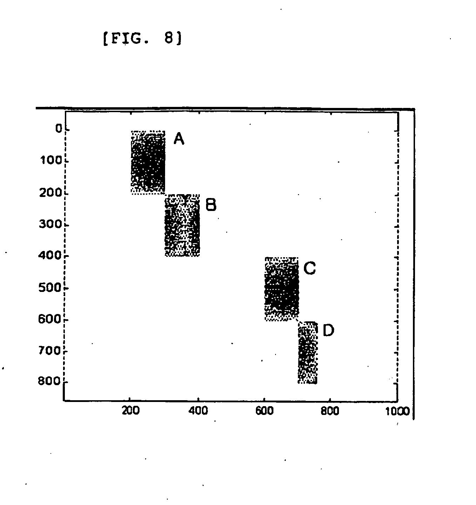

FIG. 8 illustrates a case where the sign of the x0 is negative. The detected spots are shifted toward the left side. In this case, a portion of the spot Sc of the main readout beam is detected by the photodiode B.

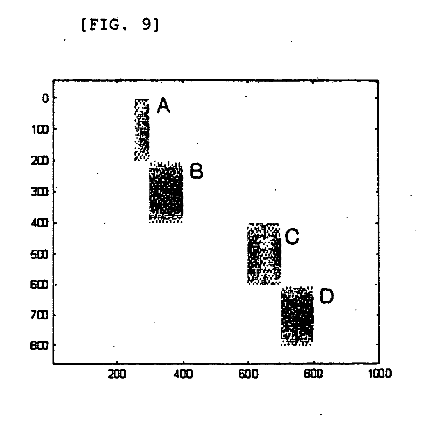

FIG. 9 illustrates a case where the sign of the x0 is positive. The detected spots are shifted toward the right side. In this case, a portion of the spot Sc of the main readout beam is detected by the photodiode C.

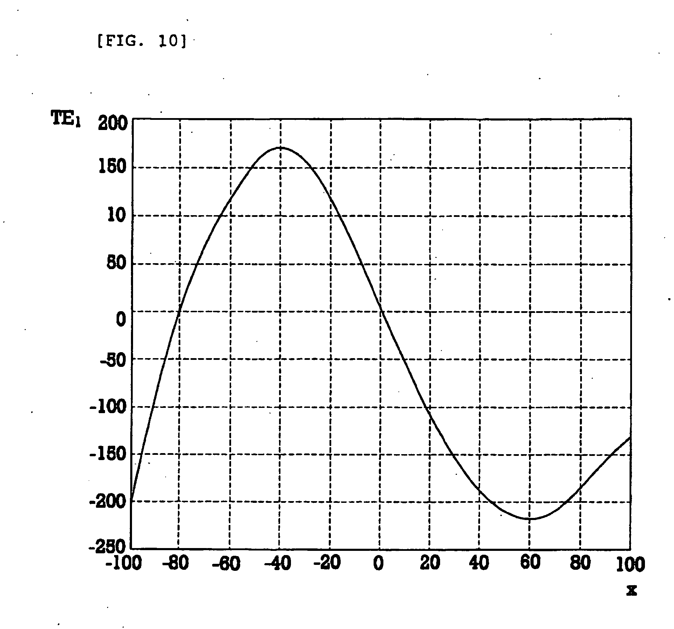

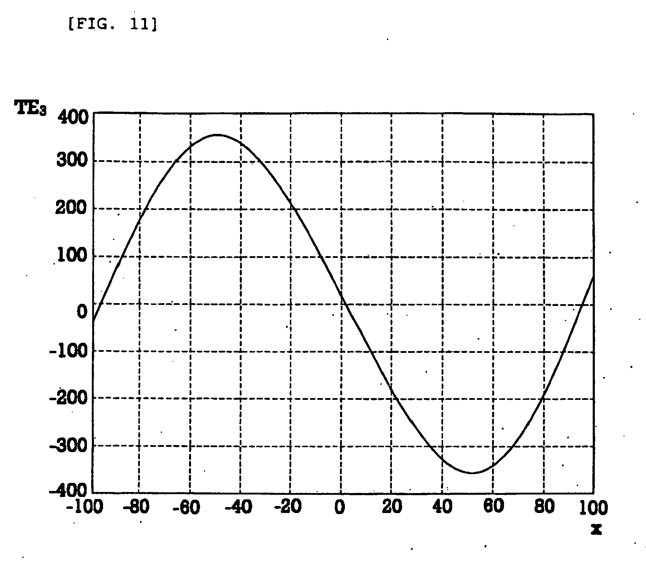

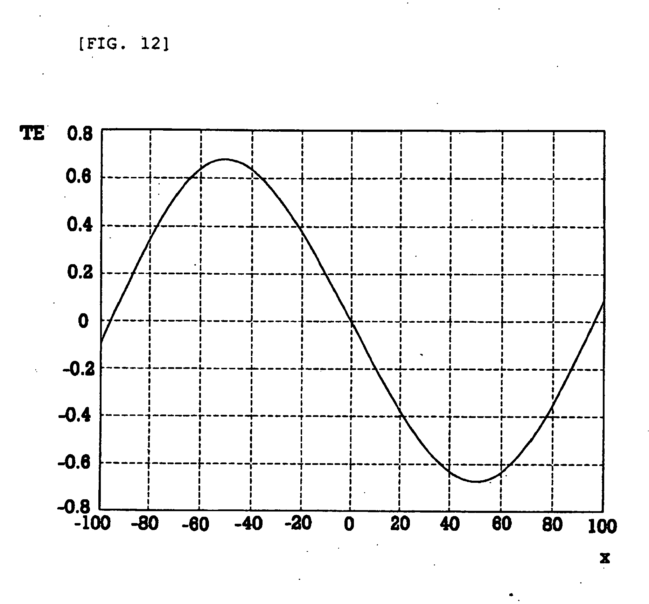

FIGS. 10 to 12 are graphs illustrating tracking errors. FIGS. 10, 11, and 12 illustrate $TE_1$, $TE_3$ of Equation 7, and TE of Equation 1, respectively.
Referring to FIGS. 10 to 12, it can be understood that, as x is changed, the $TE_1$ becomes asymmetric with respect to the origin, but the $TE_3$ and TE are maintained symmetric with respect to the origin.

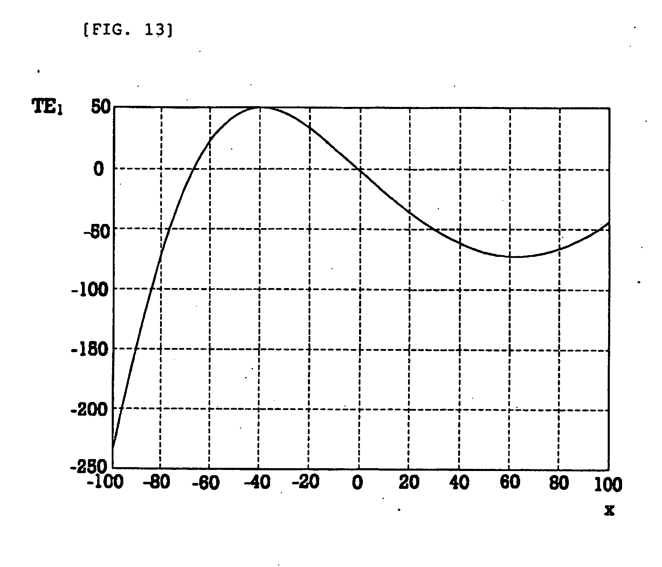

FIGS. 13 to 15 are graphs illustrating tracking errors according to a change in efficiency. Here, it is assumed that $\eta_{L2} = 1$, $\eta_L = 0.4$, $\eta_R = 0.7$, and $\eta_{R2} = 1$. FIGS. 13, 14, and 15 illustrate $TE_1$, $TE_3$ of Equation 7, and TE of Equation 1, respectively.
Referring to FIGS. 13 to 15, it can be understood that, as x is changed, the $TE_1$ becomes asymmetric with

respect to the origin. Although the $TE_3$ is maintained symmetric with respect to the origin, the magnitude thereof is greatly changed as shown in FIG. 14. On the country, the magnitude of the TE is not greatly changed shown in FIG. 15. Therefore, the tracking error is not sensitive to the efficiency of the readout beam.

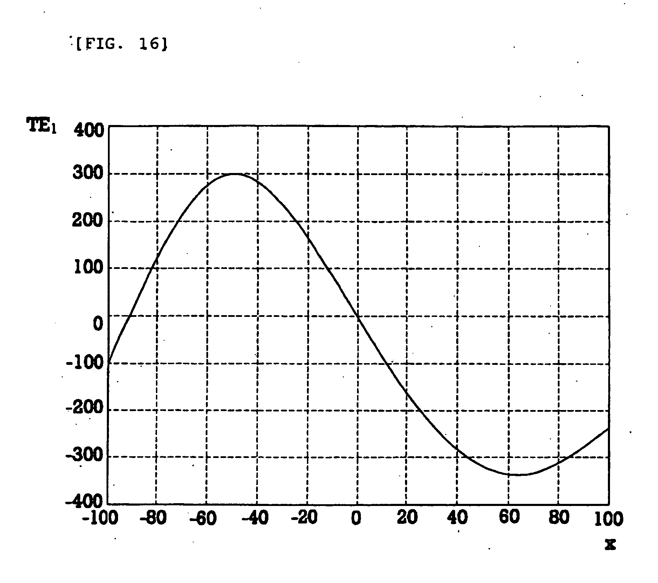

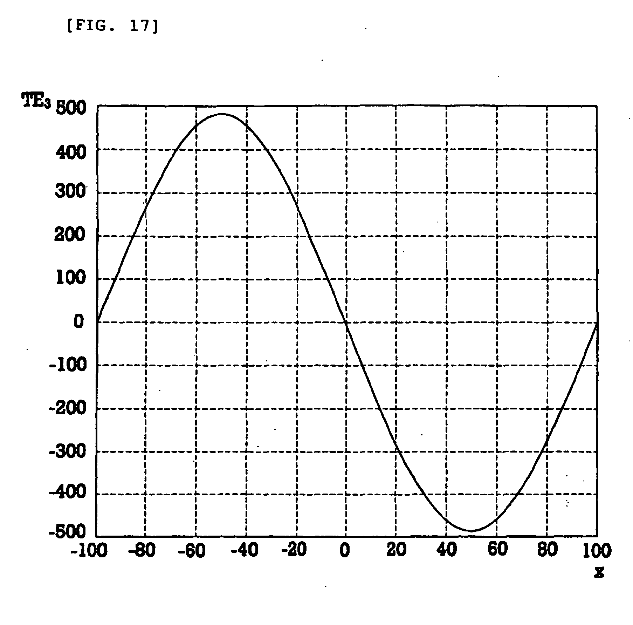

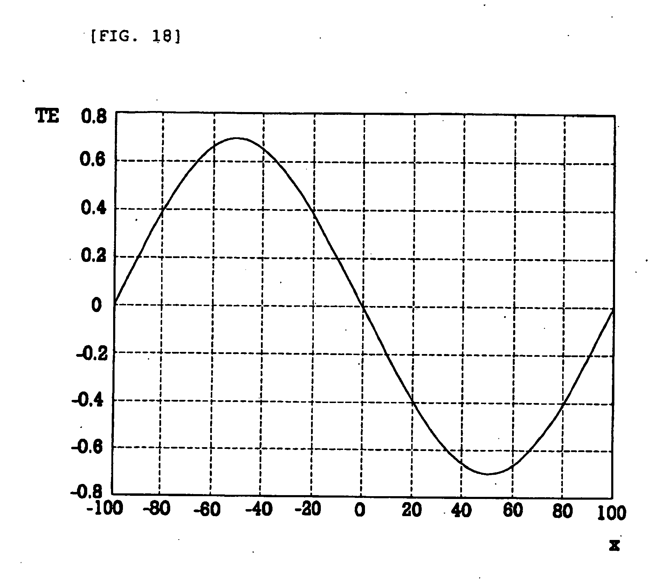

FIGS. 16 to 18 are graphs illustrating tracking errors according to a change in efficiency. Here, it is assumed that $\eta_{L2} = 1$, $\eta_L = 1.6$, $\eta_R = 0.8$, and $\eta_{R2} = 1$. FIGS. 16, 17, and 18 illustrate $TE_1$, $TE_3$ of Equation 7, and TE of Equation 1, respectively.

Referring to FIGS. 16 to 18, it can be understood that, the TE is maintained symmetric with respect to the origin, and the magnitude thereof is not greatly changed according to the change in efficiency of the readout beam similarly to the case shown in FIGS. 13 to 15.

Now, detection of the angle servo error is described in detail.

An ideal arrangement of the neighborhood readout beams and the photo detector 170 may be implemented as shown in FIG. 3. Namely, in FIG. 3, the optical information is ideally recorded on the recording regions Rc, $R_L$, and $R_R$ of the current track, the track L, and the track R in the recording medium.

The signal processing unit 180 obtains an angle servo error AE defined by Equation 14 based on the intensities of the neighborhood readout beams detected by the photo detector 170.

[Equation 14]

$$AE = \frac{(P_A + P_B) - (P_C + P_D)}{P_A + P_B + P_C + P_D}$$

According to Embodiment of the invention, the angle servo error AE is calculated from a difference between the intensities of the neighborhood readout beams. The neighborhood readout beams include neighborhood readout beams reproduced from two tracks that are different from each other. The servo tracking error AE is defined as a difference between the intensities $P_A + P_B$ of the neighborhood readout beams reproduced from the track L and the intensities $P_C + P_D$ of the neighborhood readout beams reproduced from the track R divided by a sum of the intensities $P_A + P_B$ of the neighborhood readout beams reproduced from the track L and the intensities $P_C + P_D$ of the neighborhood readout beams reproduced from the track R.

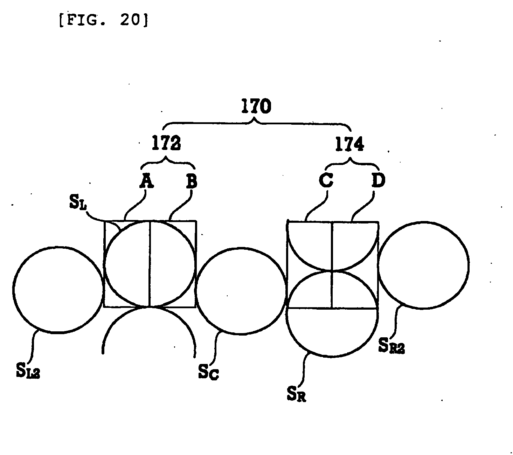

In an actual recording medium, there are errors of the distances between the recording regions Rc, $R_L$, and $R_R$ formed on the recording medium and errors between the diameters of spots formed in the tracks. Therefore, as shown in FIGS. 19 and 20, the detected spots reproduced from the recording region Rc of the current track and the recording regions $R_L$ and $R_R$ or the tracks L and R are in the shifted state in the detection of the photo detector 170.

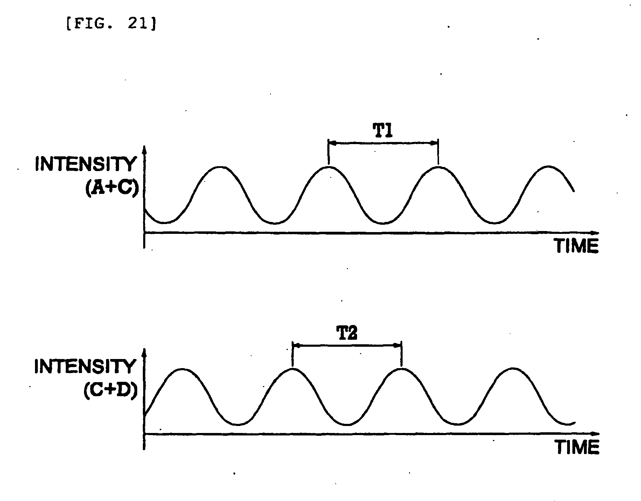

FIG. 21 illustrates graphs of the intensities of the neighborhood readout beams detected by the first and second photo detectors 172 and 174 in the states shown in FIG. 20. As shown in FIG. 21, it can be seen that the maximum values of the intensities of the neighborhood readout beams detected by the first and second photo detectors 172 and 174 occur with a predetermined time delay according to the states of the tracks.

Accordingly, even in a normal angle servo state of the reference beam, an angle servo error may be detected according to the difference between the intensities detected by the first and second photo detectors 172 and 174.

Therefore, the angle servo error of the reference beam and the intensities of the neighborhood readout beams detected by the first and second photo detectors 172 and 174 needs to be calculated by taking into consideration the time delay according to the states of the tracks. Accordingly, the angle servo error AE can be represented by Equation 15.

[Equation 15]

$$AE = \frac{(P_A + P_B)_{max} - (P_C + P_D)_{max}}{(P_A + P_B)_{max} + (P_C + P_D)_{max}}$$

Equation 15 needs to satisfy the following conditions.

$$(P_A + P_B)_{max} = \max_{t \in T} (P_A + P_B)$$

$$(P_C + P_D)_{\mathbf{max}} = \frac{\mathbf{max}}{t \in T}(P_C + P_D)$$

$$T = MAX\{T1, T2\}$$

Here, T is a time interval taken when one recording region passes through one photo detector 172 or 174.

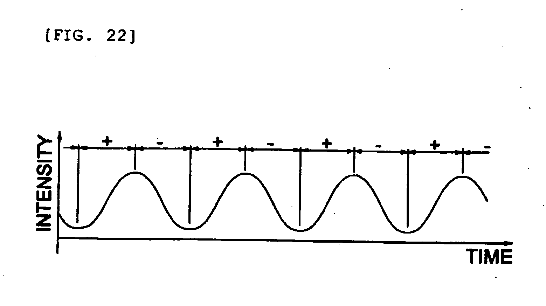

The time interval T of Equation 15 can be determined as a graph shown in FIG. 22. The time interval is set to be in a range of 85% to 95% of an average of the time interval detected by taking into consideration noise of intensity which is detected as a sum of time intervals according to a positively increasing slope and a negatively decreasing slope corresponding to changes in the intensities of the readout beams detected by the first and second photo detectors 172 and 174.

The multiplexer and the tilting state of the recording medium can be corrected according to the intensities of the neighborhood readout beams detected by the first and second photo detectors 172 and 174.

Modifications to the aforementioned embodiment may be available. For example, instead of one light source, two or more light sources may be used to generate the reference beams. In this case, the reference beam of the one light source is irradiated on the recording region of the current track, and the reference beam of the other light source is irradiated on the recording region of the neighborhood track, so that the readout beams can be generated.

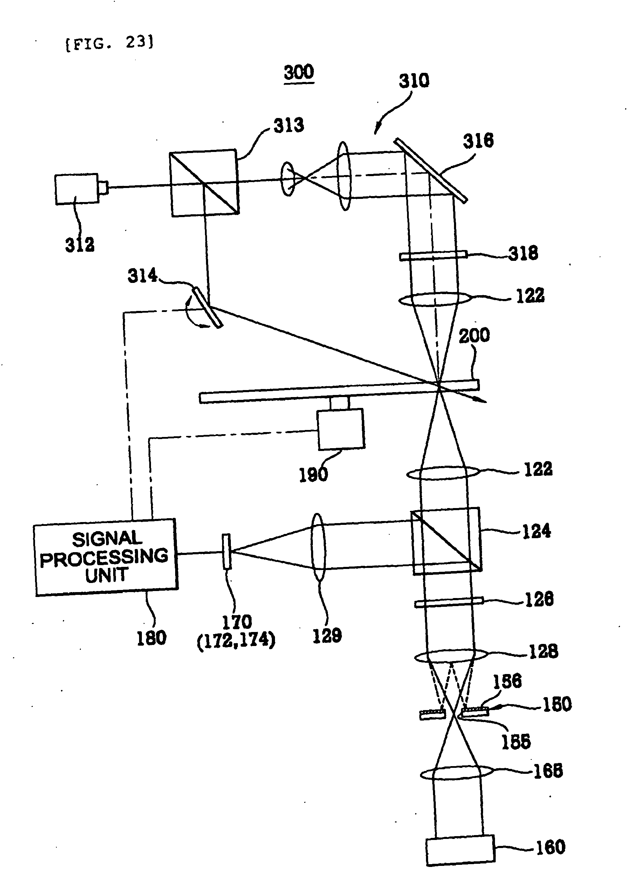

FIG. 23 is a schematic view illustrating another optical information recording reproducing apparatus. The same reference numerals as those of the embodiment shown in FIG. 1 denote the same elements.

Referring to FIG. 23, the optical information recording reproducing apparatus 300 includes an optical system 310, a neighborhood beam separator 150, an optical information detector 160, a photo detector 170, and a signal processing unit 180. Except for the optical system 130, the other elements are same as those of the embodiment shown in FIG. 1. Hereinafter, the optical system 310 is described, but description of the same elements is omitted.

The optical system 310 includes a light source 312, an beam splitter 313, a multiplexer 314, and a spatial optical modulator 318. The beam generated by the light source 312 is divided into a reference beam and a signal beam by the beam splitter 313. The reference beam is reflected by the multiplexer 314 to be irradiated on the optical information recording medium 150 at a predetermined incidence angle.

The path of the signal beam is changed by a reflecting mirror 316 to propagate toward the spatial optical modulator 318. The spatial optical modulator 140) optically modulates the input information or data to generate a two-dimensional data image or data page. The data page is projected on the signal beam, and the signal beam is irradiated on the optical information recording medium 200. When the reference beam and the signal beam are irradiated, the interference pattern therebetween is recorded on the optical information recording medium 200.

In the reproduction of the data, the signal beam is blocked, and only the reference beam is irradiated, so that the readout beam is generated from the interference pattern.

According to this, a tracking error can be detected and controlled by using readout beams reproduced from neighborhood tracks.

In addition, an angle servo error can be detected and controlled by using readout beams reproduced from neighborhood tracks.

**Claims**

1. An holographic optical information processing method comprising steps of:

   irradiating a reference beam on an optical information recording medium(200);
   said optical recording medium having a plurality of recording regions ($R_{L2}$, $R_L$, $R_C$, $R_R$, $R_{R2}$) ;
   said reference beam being diffracted by interference patterns formed on said plurality of recording regions ($R_{L2}$, $R_L$, $R_C$, $R_R$, $R_{R2}$) ;
   said recording regions ($R_{L2}$, $R_L$, $R_C$, $R_R$, $R_{R2}$) being disposed in parallel tracks(L,L2,R,R2) so as to enclose a specific recording region ($R_C$) of a selected track and first and second recording regions ($R_L$, $R_R$) of directly neighboring tracks (L, R) and adjacent to the specific recording region ($R_C$);
   separating, by a neighborhood beam separator (150), from the reference beam a readout beam reproduced from the specific recording region ($R_C$) and the first ($S_L$) and second ($S_R$) neighborhood readout beams reproduced from the first ($R_L$) and second recording regions ($R_R$);

detecting intensities($P_A$, $P_B$) of two separated parts (A,B) of a partitioned (150) first neighborhood readout beam ($S_L$) and intensities ($P_C$, $P_D$) of two separated parts (C, D) of a partitioned second neighborhood read out beam ($S_R$); and

calculating an angle servo error(AE) by comparing the intensities ($P_A$, $P_B$, $P_C$, $P_D$) of the first ($S_L$) and second ($S_R$) neighborhood readout beams.

2. The holographic optical information processing method according to claim 1, wherein the angle servo error(AE) is a difference between the maximum intensity ($P_A$, $P_B$) of the first neighborhood readout beam ($S_L$) and the maximum intensity ($P_C$, $P_D$) of the second neighborhood readout beam ($S_R$) divided by a sum of the maximum intensity ($P_A$, $P_B$, $P_C$, $P_D$) of the first neighborhood readout beam ($S_L$) and the maximum intensity of the second neighborhood readout beam ($S_R$).

3. The holographic optical information processing method according to claim 1, further comprising calculating a tracking error(TE) by summating an error ($P_A$, $P_B$) of the intensity of the first neighborhood readout beam ($S_L$) and an error ($P_C$, $P_D$) of the intensity of the second neighborhood readout beam ($S_R$) divided by a sum ($P_A$, $P_B$, $P_C$, $P_D$) of the intensity ($P_A$, $P_B$) of the first neighborhood readout beam ($S_L$) and the intensity ($P_C$, $P_D$) of the second neighborhood readout beam ($S_R$).

4. The holographic optical information processing method according to claim 3, wherein the error($P_A$, $P_B$) of the intensity of the first neighborhood readout beam ($S_L$) is a difference between intensities of two separated parts (A,B) of a partitioned first neighborhood readout beam ($S_L$), and wherein the error ($P_C$, $P_D$) of the intensity of the second neighborhood readout beam ($S_R$) is a difference between intensities of two separated parts(C,D) of a partitioned second neighborhood readout beam ($S_R$).

5. An holographic optical information processing apparatus(100) comprising:

a light source (112) which emits a beam;
a polarized beam divide (124) which divides the beam into a reference beam and a signal beam;
an optical system(114) which irradiates the reference beam on an optical information recording medium(200) having a plurality of recording regions ($R_{L2}$, $R_L$, $R_C$, $R_R$, $R_{R2}$) which are disposed in a track direction to be adjacent to each other so as to enclose a specific recording region ($R_C$) and first ($R_L$) and second ($R_R$) recording regions adjacent to the specific recording region ($R_C$) ;
a neighborhood beam separator (150) which separates a readout beam reproduced from the specific recording region ($R_C$) from the first ($S_L$) and second ($S_R$) neighborhood readout beams reproduced from the first and second recording regions ($R_L$, $R_R$) by using the reference beam;
an optical information detector(160) which detects optical information from the readout beams ($S_L$, $S_R$);
a first photo detector (172) which detects two separated parts (A,B) of a partitioned the first ($S_L$) neighborhood readout beam reproduced from the first recording region ($R_L$); and
a second photo detector (174) which detects two separated parts(C,D) of a partitioned the second ($S_R$) neighborhood readout beam reproduced from the first recording region ($R_R$); and
a signal processing unit which receives intensities of the readout beams ($S_L$, $S_R$) detected by the first and second photo detector (172, 174) and calculates an angle servo error(AE) by comparing the intensities ($P_A$, $P_B$, $P_C$, $P_D$) of the first ($S_L$) and second ($S_R$) neighborhood readout beams.

6. The holographic optical information processing apparatus according to claim 5, wherein the angle servo error(AE) is a difference between the maximum intensity ($P_A$, $P_B$) of the first neighborhood readout beam ($S_L$) and the maximum intensity ($P_C$, $P_D$) of the second neighborhood readout beam ($S_R$) divided by a sum of the maximum intensity ($P_A$, $P_B$, $P_C$ $P_D$) of the first neighborhood readout beam ($S_L$) and the maximum intensity of the second neighborhood readout beam ($S_R$).

7. The holographic optical information processing apparatus according to claim 5, wherein the signal processing unit calculates a tracking error(TE) by summating an error ($P_A$, $P_B$) of the intensity of the first neighborhood readout beam ($S_L$) and an error ($P_C$, $P_D$) of the intensity of the second neighborhood readout beam ($S_R$) divided by a sum ($P_A$, $P_B$, $P_C$, $P_D$) of the intensity ($P_A$, $P_B$) of the first neighborhood readout beam ($S_L$) and the intensity ($P_C$, $P_D$) of the second neighborhood readout beam ($S_R$).

8. The holographic optical information processing apparatus according to claim 5, wherein the error ($P_A$,$P_B$) of the intensity of the first neighborhood readout beam($S_L$) is a difference between intensities of two separated parts (A,B) of a partitioned first neighborhood readout beam ($S_L$), and
wherein the error ($P_C$, $P_D$) of the intensity of the second neighborhood readout beam ($S_R$) is a difference between intensities of two separated parts(C,D) of a partitioned second neighborhood readout beam ($S_R$).

**Patentansprüche**

1. Verfahren zur holografischen optischen Informationsverarbeitung, mit den folgenden Schritten:

Bestrahlen eines optischen Informationsaufzeichnungsmediums (200) mit einem Referenzstrahl;
wobei das optische Aufzeichnungsmedium mehrere Aufzeichnungsregionen ($R_{L2}$, $R_L$, $R_C$, $R_R$, $R_{R2}$) aufweist;
wobei der Referenzstrahl durch auf den mehreren Aufzeichnungsregionen ($R_{L2}$, $R_L$, $R_C$, $R_R$, $R_{R2}$) gebildete Interferenzmuster gebeugt wird;
wobei die Aufzeichnungsregionen ($R_{L2}$, $R_L$, $R_C$, $R_R$, $R_{R2}$) in parallelen Spuren (L, L2, R, R2) angeordnet sind, um so eine spezifische Aufzeichnungsregion ($R_C$) einer gewählten Spur und eine erste und zweite Aufzeichungsregion ($R_L$, $R_R$) direkt benachbarter Spuren (L, R), die an die spezifische Aufzeichnungsregion ($R_C$) angrenzen, einzuschließen;
Trennen eines aus der spezifischen Aufzeichnungsregion ($R_C$) wiedergegebenen Auslesestrahls und des aus der ersten ($R_L$) und zweiten Aufzeichnungsregion ($R_R$) wiedergegebenen ersten ($S_L$) und zweiten ($S_R$) Nachbarauslesestrahls von dem Referenzstrahl durch eine Nachbarstrahl-Trennvorrichtung (150);
Detektieren von Intensitäten ($P_A$, $P_B$) von zwei getrennten Teilen (A, B) eines aufgeteilten (150) ersten Nachbarauslesestrahls ($S_L$) und von Intensitäten ($P_C$, $P_D$) von zwei getrennten Teilen (C, D) eines aufgeteilten Nachbarauslesestrahls ($S_R$) ; und
Berechnen eines Winkelservofehlers (AE) durch Vergleichen der Intensitäten ($P_A$, $P_B$, $P_C$, $P_D$) des ersten ($S_L$) und zweiten ($S_R$) Nachbarauslesestrahls.

2. Verfahren zur holografischen optischen Informationsverarbeitung nach Anspruch 1,
wobei der Winkelservofehler (AE) eine Differenz zwischen der maximalen Intensität ($P_A$, $P_B$) des ersten Nachbarauslesestrahls ($S_L$) und der maximalen Intensität ($P_C$, $P_D$) des zweiten Nachbarauslesestrahls ($S_R$), dividiert durch eine Summe der maximalen Intensität ($P_A$, $P_B$, $P_C$, $P_D$) des ersten Nachbarauslesestrahls ($S_L$) und der maximalen Intensität des zweiten Nachbarauslesestrahls ($S_R$), ist.

3. Verfahren zur holografischen optischen Informationsverarbeitung nach Anspruch 1, ferner mit dem folgenden Schritt:

Berechnen eines Trackingfehlers (TE) durch Summierung eines Fehlers ($P_A$, $P_B$) der Intensität des ersten Nachbarauslesestrahls ($S_L$) und eines Fehlers ($P_C$, $P_D$) der Intensität des zweiten Nachbarauslesestrahls ($S_R$), dividiert durch eine Summe ($P_A$, $P_B$, $P_C$, $P_D$) der Intensität ($P_A$, $P_B$) des ersten Nachbarauslesestrahls ($S_L$) und der Intensität ($P_C$, $P_D$) des zweiten Nachbarauslesestrahls ($S_R$).

4. Verfahren zur holografischen optischen Informationsverarbeitung nach Anspruch 3,
wobei der Fehler ($P_A$, $P_B$) der Intensität des ersten Nachbarauslesestrahls ($S_L$) eine Differenz zwischen Intensitäten von zwei getrennten Teilen (A, B) eines aufgeteilten ersten Nachbarauslesestrahls ($S_L$) ist und
wobei der Fehler ($P_C$, $P_D$) der Intensität des zweiten Nachbarauslesestrahls ($S_R$) eine Differenz zwischen Intensitäten von zwei getrennten Teilen (C, D) eines aufgeteilten zweiten Nachbarauslesestrahls ($S_R$) ist.

5. Vorrichtung (100) zur holografischen optischen Informationsverarbeitung, umfassend:

eine Lichtquelle (112), die einen Strahl emittiert;
einen Polarisationsstrahlteiler (124), der den Strahl in einen Referenzstrahl und einen Signalstrahl aufteilt;
ein optisches System (114), das ein optisches Informationsaufzeichnungsmedium (200) mit dem Referenzstrahl bestrahlt, das mehrere Aufzeichnungsregionen ($R_{L2}$, $R_L$, $R_C$, $R_R$, $R_{R2}$) aufweist, die in einer Spurrichtung so angeordnet sind, dass sie aneinander angrenzen, um so eine spezifische Aufzeichnungsregion ($R_C$) und eine erste ($R_L$) und zweite ($R_R$) Aufzeichnungsregion, die an die spezifische Aufzeichnungsregion ($R_C$) angrenzen, einzuschließen;
eine Nachbarstrahl-Trennvorrichtung (150), die einen aus der spezifischen Aufzeichnungsregion ($R_C$) wiedergegebenen Auslesestrahl durch Verwendung des Referenzstrahls von dem aus der ersten und zweiten Aufzeichnungsregion ($R_L$, $R_R$) wiedergegebenen ersten ($S_L$) und zweiten ($S_R$) Nachbarauslesestrahl trennt;
einen optischen Informationsdetektor (160), der optische Informationen aus den Auslesestrahlen ($S_L$, $S_R$) detektiert;

einen ersten Photodetektor (172), der zwei getrennte Teile (A, B) eines aufgeteilten aus der ersten Aufzeichnungsregion ($R_L$) wiedergegebenen ersten ($S_L$) Nachbarauslesestrahls detektiert; und

einen zweiten Photodetektor (174), der zwei getrennte Teile (C, D) eines aufgeteilten aus der ersten Aufzeichnungsregion ($R_R$) wiedergegebenen zweiten ($S_R$) Nachbarauslesestrahls detektiert; und

eine Signalverarbeitungseinheit, die durch den ersten und zweiten Photodetektor (172, 174) detektierte Intensitäten der Auslesestrahlen ($S_L$, $S_R$) empfängt und durch Vergleichen der Intensitäten ($P_A$, $P_B$, $P_C$, $P_D$) des ersten ($S_L$) und zweiten ($S_R$) Nachbarauslesestrahls einen Winkelservofehler (AE) berechnet.

6. Vorrichtung zur holografischen optischen Informationsverarbeitung nach Anspruch 5,
wobei der Winkelservofehler (AE) eine Differenz zwischen der maximalen Intensität ($P_A$, $P_B$) des ersten Nachbarauslesestrahls ($S_L$) und der maximalen Intensität ($P_C$, $P_D$) des zweiten Nachbarauslesestrahls ($S_R$), dividiert durch eine Summe der maximalen Intensität ($P_A$, $P_B$, $P_C$, $P_D$) des ersten Nachbarauslesestrahls ($S_L$) und der maximalen Intensität des zweiten Nachbarauslesestrahls ($S_R$), ist.

7. Vorrichtung zur holografischen optischen Informationsverarbeitung nach Anspruch 5,
wobei die Signalverarbeitungseinheit einen Trackingfehler (TE) durch Summieren eines Fehlers ($P_A$, $P_B$) der Intensität des ersten Nachbarauslesestrahls ($S_L$) und eines Fehlers ($P_C$, $P_D$) der Intensität des zweiten Nachbarauslesestrahls ($S_R$), dividiert durch eine Summe ($P_A$, $P_B$, $P_C$, $P_D$) der Intensität ($P_A$, $P_B$) des ersten Nachbarauslesestrahls ($S_L$) und der Intensität ($P_C$, $P_D$) des zweiten Nachbarauslesestrahls ($S_R$) berechnet.

8. Vorrichtung zur holografischen optischen Informationsverarbeitung nach Anspruch 5,
wobei der Fehler ($P_A$, $P_B$) der Intensität des ersten Nachbarauslesestrahls ($S_L$) eine Differenz zwischen Intensitäten von zwei getrennten Teilen (A, B) eines aufgeteilten ersten Nachbarauslesestrahls ($S_L$) ist und
wobei der Fehler ($P_C$, $P_D$) der Intensität des zweiten Nachbarauslesestrahls ($S_R$) eine Differenz zwischen Intensitäten von zwei getrennten Teilen (C, D) eines aufgeteilten zweiten Nachbarauslesestrahls ($S_R$) ist.

## Revendications

1. Procédé de traitement d'informations optiques holographiques comprenant les étapes consistant à :

projeter un faisceau de référence sur un support d'enregistrement d'informations optiques (200) ;
ledit support d'enregistrement optique ayant une pluralité de régions d'enregistrement ($R_{L2}$, $R_L$, $R_C$, $R_R$, $R_{R2}$) ;
ledit faisceau de référence étant diffracté par des motifs d'interférence formés sur ladite pluralité de régions d'enregistrement ($R_{L2}$, $R_L$, $R_C$, $R_R$, $R_{R2}$) ;
lesdites régions d'enregistrement ($R_{L2}$, $R_L$, $R_C$, $R_R$, $R_{R2}$) étant disposées dans des pistes parallèles (L, L2, R, R2) de façon à délimiter une région d'enregistrement spécifique ($R_C$) d'une piste sélectionnée et des première et seconde régions d'enregistrement ($R_L$, $R_R$) de pistes directement voisines (L, R) et adjacentes à la région d'enregistrement spécifique ($R_C$) ;
au moyen d'un séparateur de faisceaux de voisinage (150), séparer du faisceau de référence un faisceau de lecture reproduit à partir de la région d'enregistrement spécifique ($R_C$), et des premier ($S_L$) et second ($S_R$) faisceaux de lecture de voisinage reproduits à partir des première ($R_L$) et seconde ($R_R$) régions d'enregistrement ;
détecter des intensités ($P_A$, $P_B$) de deux parties séparées (A, B) d'un premier faisceau de lecture de voisinage ($S_L$) partitionné (150) et des intensités ($P_C$, $P_D$) de deux parties séparées (C, D) d'un second faisceau de lecture de voisinage ($S_R$) partitionné ; et
calculer une erreur d'asservissement d'angle (AE) en comparant les intensités ($P_A$, $P_B$, $P_C$, $P_D$) des premier ($S_L$) et second ($S_R$) faisceaux de lecture de voisinage.

2. Procédé de traitement d'informations optiques holographiques selon la revendication 1,
dans lequel l'erreur d'asservissement d'angle (AE) est une différence entre l'intensité maximale ($P_A$, $P_B$) du premier faisceau de lecture de voisinage ($S_L$) et l'intensité maximale ($P_C$, $P_D$) du second faisceau de lecture de voisinage ($S_R$) divisée par une somme de l'intensité maximale ($P_A$, $P_B$, $P_C$, $P_D$) du premier faisceau de lecture de voisinage ($S_L$) et de l'intensité maximale du second faisceau de lecture de voisinage ($S_R$).

3. Procédé de traitement d'informations optiques holographiques selon la revendication 1, consistant en outre à :

calculer une erreur de poursuite (TE) par sommation d'une erreur ($P_A$, $P_B$) de l'intensité du premier faisceau de lecture de voisinage ($S_L$) et d'une erreur ($P_C$, $P_D$) de l'intensité du second faisceau de lecture de voisinage ($S_R$), et division par une somme ($P_A$, $P_B$, $P_C$, $P_D$) de l'intensité ($P_A$, $P_B$) du premier faisceau de lecture de voisinage ($S_L$) et de l'intensité ($P_C$, $P_D$) du second faisceau de lecture de voisinage ($S_R$).

4. Procédé de traitement d'informations optiques holographiques selon la revendication 3,
dans lequel l'erreur ($P_A$, $P_B$) de l'intensité du premier faisceau de lecture de voisinage ($S_L$) est une différence entre des intensités de deux parties séparées (A, B) d'un premier faisceau de lecture de voisinage ($S_L$) partitionné, et
dans lequel l'erreur ($P_C$, $P_D$) de l'intensité du second faisceau de lecture de voisinage ($S_R$) est une différence entre des intensités de deux parties séparées (C, D) d'un second faisceau de lecture de voisinage ($S_R$) partitionné.

5. Appareil de traitement d'informations optiques holographiques (100) comprenant :

une source de lumière (112) qui émet un faisceau ;
un diviseur de faisceau polarisé (124) qui divise le faisceau en un faisceau de référence et en un faisceau de signal ;
un système optique (114) qui projette le faisceau de référence sur un support d'enregistrement d'informations optiques (200) ayant une pluralité de régions d'enregistrement ($R_{L2}$, $R_L$, $R_C$, $R_R$, $R_{R2}$) qui sont disposées dans une direction des pistes afin qu'elles soient adjacentes les unes aux autres pour entourer une région d'enregistrement spécifique ($R_C$) et des première ($R_L$) et seconde ($R_R$) régions d'enregistrement adjacentes à la région d'enregistrement spécifique ($R_C$) ;
un séparateur de faisceau de voisinage (150) qui sépare un faisceau de lecture reproduit à partir de la région d'enregistrement spécifique ($R_C$) des premier ($S_L$) et second ($S_R$) faisceaux de lecture de voisinage reproduits à partir des première et seconde régions d'enregistrement ($R_L$, $R_R$) en utilisant le faisceau de référence ;
un détecteur d'informations optiques (160) qui détecte des informations optiques à partir des faisceaux de lecture ($S_L$, $S_R$) ;
un premier photodétecteur (172) qui détecte deux parties séparées (A, B) du premier ($S_L$) faisceau de lecture de voisinage partitionné reproduit à partir de la première région d'enregistrement ($R_L$) ; et
un second photodétecteur (174) qui détecte deux parties séparées (C, D) du second ($S_R$) faisceau de lecture de voisinage partitionné reproduit à partir de la première région d'enregistrement ($R_R$) ; et
une unité de traitement de signaux qui reçoit des intensités des faisceaux de lecture ($S_L$, $S_R$) détectés par les premier et second photodétecteurs (172, 174) et calcule une erreur d'asservissement d'angle (AE) en comparant les intensités ($P_A$, $P_B$, $P_C$, $P_D$) des premier ($S_L$) et second ($S_R$) faisceaux de lecture de voisinage.

6. Appareil de traitement d'informations optiques holographiques selon la revendication 5,
dans lequel l'erreur d'asservissement d'angle (AE) est une différence entre l'intensité maximale ($P_A$, $P_B$) du premier faisceau de lecture de voisinage ($S_L$) et l'intensité maximale ($P_C$, $P_D$) du second faisceau de lecture de voisinage ($S_R$) divisée par une somme de l'intensité maximale ($P_A$, $P_B$, $P_C$, $P_D$) du premier faisceau de lecture de voisinage ($S_L$) et de l'intensité maximale du second faisceau de lecture de voisinage ($S_R$).

7. Appareil de traitement d'informations optiques holographiques selon la revendication 5,
dans lequel l'unité de traitement de signaux calcule une erreur de poursuite (TE) par sommation d'une erreur ($P_A$, $P_B$) de l'intensité du premier faisceau de lecture de voisinage ($S_L$) et d'une erreur ($P_C$, $P_D$) de l'intensité du second faisceau de lecture de voisinage ($S_R$), et division par une somme ($P_A$, $P_B$, $P_C$, $P_D$) de l'intensité ($P_A$, $P_B$) du premier faisceau de lecture de voisinage ($S_L$) et de l'intensité ($P_C$, $P_D$) du second faisceau de lecture de voisinage ($S_R$).

8. Appareil de traitement d'informations optiques holographiques selon la revendication 5,
dans lequel l'erreur ($P_A$, $P_B$) de l'intensité du premier faisceau de lecture de voisinage ($S_L$) est une différence entre des intensités de deux parties séparées (A, B) d'un premier faisceau de lecture de voisinage ($S_L$) partitionné, et
dans lequel l'erreur ($P_C$, $P_D$) de l'intensité du second faisceau de lecture de voisinage ($S_R$) est une différence entre les intensités de deux parties séparées (C, D) d'un second faisceau de lecture de voisinage ($S_R$) partitionné.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

[FIG. 14]

[FIG. 15]

[FIG. 16]

[FIG. 17]

[FIG. 18]

[FIG. 19]

[FIG. 20]

[FIG. 21]

[FIG. 22]

[FIG. 23]

**EP 1 876 590 B1**

## REFERENCES CITED IN THE DESCRIPTION

### Patent documents cited in the description

- US 20050030875 A
- EP 1526517 A
- US 20050030876 A